# EUROPÄISCHE PATENTSCHRIFT

(11) **EP 3 066 347 B1**
(45) Veröffentlichungstag und Bekanntmachung des Hinweises auf die Patenterteilung: **16.08.2017**
(21) Anmeldenummer: 14793124.0
(22) Anmeldetag: 04.11.2014
(51) Int. Cl.: F16B 13/06

(54) **SPREIZANKER MIT FURCHEN IM SPREIZKONUS**
EXPANSION ANCHOR WITH GROOVES IN THE EXPANDING CONE
ANCRAGE EXPANSIBLE DOTÉ DE SILLONS DANS LE CÔNE D'EXPANSION

(30) Priorität: 06.11.2013 EP 13191706
(43) Veröffentlichungstag der Anmeldung: 14.09.2016
(73) Patentinhaber: Hilti Aktiengesellschaft, 9494 Schaan (LI)
(72) Erfinder: GSTACH, Peter, FL-9494 Schaan (LI); SPAMPATTI, Matteo, A-6800 Feldkirch (AT); WINKLER, Bernhard, A-6800 Feldkirch (AT)
(74) Vertreter: Hilti Aktiengesellschaft Corporate Intellectual Property
(86) Internationale Anmeldenummer: PCT/EP2014/073630
(87) Internationale Veröffentlichungsnummer: WO 2015/067578

(56) Entgegenhaltungen:
- DE-A1- 2 256 822
- DE-A1-102011 076 180
- US-A- 5 176 481
- US-A1- 2011 081 217

## Beschreibung

Die Erfindung betrifft einen Spreizanker gemäss dem Oberbegriff des Anspruchs 1. Ein solcher Spreizanker ist ausgestattet mit einem Bolzen und einem Expansionselement, wobei im Bereich des ersten Endes des Bolzens eine Schrägfläche abgeordnet ist, welche das Expansionselement radial nach aussen drängt, wenn der Bolzen in einer Auszugsrichtung relativ zum Expansionselement versetzt wird, und wobei der Bolzen im Bereich seines dem ersten Ende abgewandten rückwärtigen Endes eine Lastaufnahmeeinrichtung aufweist, welche zur Einleitung von Zugkräften, die in Auszugsrichtung gerichtet sind, in den Bolzen geeignet ist.

Ein gattungsgemässer Spreizanker ist beispielsweise aus der US 5 176 481 A bekannt. Er wird dazu verwendet, um Bauteile an einem Bohrloch in einem festen Substrat, beispielsweise in Beton, zu verankern. Der bekannte Spreizanker weist einen länglichen Bolzen auf. Im Bereich seines ersten, vorderen Endes weist der Bolzen einen konusförmigen Spreizabschnitt auf, der sich zum ersten Ende hin, das heisst entgegen der Auszugsrichtung, aufweitet. In Auszugsrichtung neben Spreizabschnitt ist eine zum ersten Ende hin auf den Spreizabschnitt verschiebbar gelagerte Spreizhülse angeordnet. Die Spreizhülse hat aussenseitig Erhebungen, die in radialer Richtung über den Bolzen herausragen, und mit denen sich die Spreizhülse an der Innenwand des Bohrlochs im Substrat verhaken kann. Der Spreizanker wird mit dem ersten Ende voran entgegen der Auszugsrichtung in das Bohrloch eingeschlagen und anschliessend wird der Bolzen in Auszugsrichtung wieder ein Stück weit aus dem Bohrloch herausgezogen. Nach dem Einschlagen des Spreizankers verhakt sich die Spreizhülse an der Innenwand des Bohrlochs und wird daher beim Herausziehen des Bolzens im Bohrloch zurückgehalten. Hierdurch wird der Spreizabschnitt des Bolzens in die Spreizhülse gezogen, wobei die Spreizhülse aufgrund des zunehmenden Durchmessers des Spreizabschnitts aufgespreizt wird und sich der Spreizanker mit der Spreizhülse im Substrat verklemmt, so dass Lasten in das Substrat übertragen werden können. Dieses Grundprinzip kann zweckmässigerweise auch bei der Erfindung verwirklicht werden.

Die US 5 176 481 A lehrt weiter, den Bolzen im Bereich der Spreizhülse mit einer reibungsmindernden Beschichtung zu versehen.

Weitere Spreizanker sind aus der DE 2256822 A1 bekannt, wobei die DE 2256822 A1 formschlüssige Verdrehsicherungen zwischen Spreizhülse und Bolzen lehrt. Beispielsweise kann gemäss DE 2256822 A1 am Bolzen eine Nut vorgesehen sein, die sich vom Hals des Bolzens ein Stück weit in den Spreizkonus hinein erstreckt, wobei an der Spreizhülse ein korrespondierender Vorsprung angeordnet ist, welcher der Nut im Querschnitt des Ankers folgt und in die Nut eingreift.

Die US2011081217 AA und die DE102011076180 A1 beschreiben Spreizanker, bei denen der Spreizkonus einen nicht-kreisförmigen Querschnitt mit mehreren Höhenmaxima und mehreren Höhenminima aufweist.

Aufgabe der Erfindung ist es, einen besonders leistungsfähigen und vielseitig einsetzbaren, und zugleich auch besonders zuverlässigen und einfach herstellbaren Spreizanker anzugeben.

Die Aufgabe wird erfindungsgemäss durch einen Spreizanker mit den Merkmalen des Anspruchs 1 gelöst. Bevorzugte Ausführungsformen sind in den abhängigen Ansprüchen angegeben.

Ein erfindungsgemässer Spreizanker ist dadurch gekennzeichnet, dass in die Schrägfläche zumindest eine zum ersten Ende des Bolzens hin geschlossene, vorzugsweise längliche, Furche eingebracht ist, welche die Kontaktfläche zwischen dem Expansionselement und der Schrägfläche verringert.

Die Erfindung basiert auf der Erkenntnis, dass bei der Auslegung von Spreizankern die Situation auftreten kann, bei der eine Änderung der Ausgestaltung des Ankers zwar an einer Stelle zu einer Verbesserung des Ankerverhaltens führt, dies jedoch mit Einbussen an anderer Stelle einhergeht. So kann es beispielsweise einerseits wünschenswert sein, zwischen der Schrägfläche und dem Expansionselement einen hohen Reibungskoeffizienten vorzusehen, um ein Durchziehen der Schrägfläche durch das Expansionselement, das heisst insbesondere durch die Spreizhülse, und somit ein vorzeitiges Versagen des Ankers bei übermässigen statischen Zuglasten zu vermeiden. Andererseits kann ein hoher Reibungskoeffizient zwischen Schrägfläche und Expansionselement die Wahrscheinlichkeit dafür erhöhen, dass der Anker zu Beginn des Setzvorgangs nicht greift und in unerwünschter Weise aus dem Bohrloch herausgezogen wird, ohne aufzuspreizen. Darüber hinaus kann ein zu hoher Reibungskoeffizient zwischen Schrägfläche und Expansionselement nachteilig im Hinblick auf die dynamischen Eigenschaften in gerissenem Beton sein. Ist nämlich der Reibungskoeffizient zwischen Schrägfläche und Spreizhülse gross, so wird der Bolzen zwar tief in die Spreizhülse eingezogen, wenn sich ein Riss im Bereich des Ankers öffnet. Allerdings kehrt sich dieser Vorgang bei grossem Reibungskoeffizient nicht um, wenn sich der Riss im Anschluss wieder schliesst, und die Schrägfläche verbleibt tief in der Spreizhülse, was zu einer Schädigung des umgebenden Betons führen kann. Für gerissenen Beton kann daher ein niedriger Reibungskoeffizient vorteilhaft sein, um ein "Pumpen", also ein Vor- und Zurückgleiten der Schrägfläche in der Spreizhülse bei Rissöffnung und anschliessender Rissschliessung, zu gewährleisten.

Bei der Auslegung eines herkömmlichen Ankers musste man sich daher entscheiden, ob man im Hinblick auf gute Eigenschaften in gerissenem Beton mit beweglichen Rissen einen niedrigen Reibungskoeffizienten zwischen Expansionselement und Schrägfläche wählt, was jedoch mit einer geringeren statischen Auszugslast verbunden ist, oder ob ein hoher Reibungskoeffizient gewählt wird, welcher zwar zu hohen statischen Auszugslasten führt, jedoch zu schlechteren Eigenschaften in gerissenem Beton.

Hier setzt die Erfindung an und sieht im Spreizbereich des Bolzens in der Schrägfläche zumindest eine Furche vor, das heisst insbesondere eine Vertiefung, die sich von der Bolzenoberfläche radial in das Bolzeninnere erstreckt. Diese Furche reduziert die reibende Kontaktfläche zwischen dem Expansionselement und der Schrägfläche, d.h. aufgrund der Furche ist die Kontaktfläche zwischen dem Expansionselement und der Schrägfläche kleiner als wenn die Furche fehlen würde und die Schrägfläche dort stattdessen korrespondierend zur gegenüberliegenden Innenoberfläche des Expansionselements fortgesetzt wäre. Damit kann die Furche die Reibung in genau jenem Bereich des Spreizkonus verringern, in welchem das Expansionselement in gerissenem Beton reibt, so dass das zuvor beschriebene "Pumpen" bei Rissöffnung und anschliessender Rissschliessung erleichtert und eine Schädigung des Betons wirkungsvoll verhindert wird. Nach einem weiteren Grundgedanken der Erfindung ist die Furche dabei zur Ankerspitze hin geschlossen. Insbesondere ist somit die Furche bei Blick von vorne auf den Anker mit Blickrichtung parallel zur Längsachse des Bolzens verdeckt und nicht sichtbar. Hierdurch ist erfindungsgemäss vor der Furche, vorzugsweise zwischen Bolzenspitze und Spreizkonus, ein furchenfreier Bereich geschaffen. Gelangt das Expansionselement bei grossen statischen Lasten in diesen furchenfreien Bereich, so kann die Reibung des Expansionselements überproportional ansteigen, so dass ein vorzeitiges Durchziehen des Bolzens durch das Expansionselement vermieden wird. Somit kann durch die erfindungsgemässe Furche der zuvor beschriebene Widerspruch zwischen guten Eigenschaften in gerissenem Beton und hoher statischer Auszugslast in ungerissenem Beton aufgelöst werden. Folglich kann in besonders einfacher Weise ein besonders zuverlässiger und vielseitig einsetzbarer Anker zur Verfügung gestellt werden. Insbesondere kann auch häufig eine kostspielige reibungsmindernde Beschichtung entfallen. In bestimmten Last- und Anwendungsbereichen kann aber eine solche Beschichtung zusätzlich vorgesehen sein; die Erfindung schliesst dies nicht aus.

Die Furche kann an ihrer der Ankerspitze zugewandten Seite, das heisst an ihrer dem rückwärtigen Ende des Bolzens abgewandten Seite, bereits innerhalb der Schrägfläche oder erst weiter vorne am Bolzen enden. Der lokal reibungsmindernde Effekt der Furche kann auf der Verringerung der Kontaktfläche zwischen Schrägfläche und Expansionselement und/oder auf andere Mechanismen, wie der Aufnahme und Konzentration von Bohrmehl, basieren.

Das Expansionselement ist erfindungsgemäss längs des Bolzens verschiebbar am Bolzen angeordnet, insbesondere befestigt. Soweit hier von "radial", "axial" und "Umfangsrichtung" die Rede ist, kann sich dies insbesondere auf die Längsachse des Bolzens beziehen, die insbesondere die Symmetrie- und/oder Mittelachse des Bolzens sein kann. Der Spreizanker kann bevorzugt ein kraftkontrolliert spreizender Spreizanker sein. Das Expansionselement und/oder der Bolzen bestehen geeigneterweise aus einem Metallmaterial, welches wie bereits erwähnt zur weiteren gezielten Beeinflussung der Reibung auch beschichtet sein kann. Die Lastaufnahmeeinrichtung kann insbesondere als Aussengewinde oder als Innengewinde ausgebildet sein. Sie dient zur Einleitung von Zugkräften, die in Auszugsrichtung gerichtet sind, in den Bolzen. Der Bolzen kann auch teilweise hohl sein.

Erfindungsgemäss wird das Expansionselement von der Schrägfläche radial nach aussen gedrängt und dabei gegen die Bohrlochwand im Substrat gepresst, wenn die Schrägfläche, insbesondere zusammen mit dem Bolzen, in Auszugsrichtung, des Bolzens relativ zum Expansionselement axial versetzt wird. Hierdurch wird der Spreizanker im Bohrloch verankert. Vorzugsweise verläuft die Auszugsrichtung parallel zur Längsachse des Bolzens und/oder zeigt aus dem Bohrloch heraus. Insbesondere kann der Richtungsvektor der Auszugsrichtung von der Schrägfläche zur Lastaufnahmeeinrichtung gerichtet sein. An der Schrägfläche nimmt der Abstand der Bolzenoberfläche von der Längsachse des Bolzens entgegen der Auszugsrichtung, das heisst mit zunehmendem Abstand von der Lastaufnahmeeinrichtung, zu.

Besonders bevorzugt ist es, dass das Expansionselement eine Spreizhülse ist, die den Bolzen zumindest bereichsweise umgibt, und/oder dass der Bolzen einen Spreizkonus aufweist, wobei die Schrägfläche durch den Spreizkonus gebildet wird. Hierdurch wird eine besonders gleichmässige Krafteinleitung in Umfangsrichtung erzielt. Der Spreizkonus ist erfindungsgemäss zum Aufspreizen der Spreizhülse, das heisst zum radialen Aufweiten der Spreizhülse vorgesehen. Es können ein Expansionselement oder auch mehrere Expansionselemente vorgesehen sein, und eine entsprechende Zahl von Schrägflächen. Die Spreizhülse kann Spreizschlitze aufweisen, die von der vorderen Stirnseite der Spreizhülse ausgehen. Diese Spreizschlitze können das radiale Aufweiten der Spreizhülse durch den Spreizkonus des Bolzens erleichtern.

Bei einem sogenannten Bolzenanker kann der Spreizkonus axial fest am Bolzen angeordnet sein. In diesem Fall wird der Spreizkonus mit der Schrägfläche beim Setzen des Spreizankers durch eine gemeinsame axiale Bewegung des Bolzens und des Spreizkonus relativ zur Spreizhülse in die Spreizhülse eingezogen. Der Spreizkonus ist dabei vorzugsweise einstückig mit dem Bolzen ausgebildet. Alternativ kann bei einem sogenannten Hülsenanker der Spreizkonus ein vom Bolzen separates Teil sein und vorzugsweise über korrespondierende Gewinde mit dem Bolzen verbunden sein. Das Einziehen des Spreizkonus in die Spreizhülse kann dann vorzugsweise zumindest teilweise durch Rotation des Bolzens relativ zum Spreizkonus bewirkt werden, welche von einem Spindeltrieb, der von den korrespondierenden Gewinden gebildet wird, in eine Axialbewegung des Spreizkonus relativ zum Bolzen umgesetzt wird.

Besonders zweckmässig ist es, dass der Bolzen einen Spitzenbereich aufweist, der sich auf der dem ersten Ende zugewandten Seite des Spreizkonus an den Spreizkonus anschliesst, und in dem der Querschnitt des Bolzen zumindest so gross ist wie im Spreizkonus, wobei die Furche vor dem Spitzenbereich oder im Spitzenbereich endet. Gemäss dieser Ausführungsform, bei welcher vor dem Spreizbereich noch ein relativ querschnittsgrosser Spitzenbereich angeordnet ist, in welchen die zumindest eine Furche allenfalls teilweise hineinreicht, kann ein besonders geeigneter Kraftverlauf erhalten, der insbesondere einem Durchziehen des Bolzens durch die Spreizhülse besonders gut entgegenwirkt.

Besonders bevorzugt ist es, dass die Ausdehnung der Furche in Axialrichtung des Bolzens grösser ist als die Ausdehnung der Furche in Umfangsrichtung des Bolzens. Insbesondere kann die Furche, vorzugsweise auf ihrer gesamten Länge, entlang einer Projektion der Längsachse des Bolzens auf die Schrägfläche verlaufen. Die Furche kann zusätzlich oder alternativ parallel zur Längsachse des Bolzens, also in Achslängsrichtung und/oder Axialrichtung, verlaufen. Hierdurch kann einem Verkanten zwischen Expansionselement und Bolzen einfach und wirksam entgegengewirkt werden.

Es ist besonders zweckmässig, dass die Innenoberfläche des Expansionselements im Bereich der Furche glatt ist und/oder das Expansionselement nicht in die Furche eingreift, jeweils zumindest im ungesetzten Ausgangszustand des Ankers. Insbesondere weist das Expansionselement auf seiner der Schrägfläche und insbesondere dem Bolzen zugewandten Innenseite vorteilhafterweise keinen Vorsprung auf, der in die Furche eingreift. Hierdurch kann eine besonders zuverlässige lokale Reibungsreduzierung erzielt werden. Aus demselben Grunde ist derjenige Bereich des Innenquerschnitts des Expansionselements, welcher im gesetzten Zustand des Ankers gegenüber der Furche zu liegen kommt, bevorzugt konkav. Beispielsweise kann die Innenoberfläche des Expansionselements in diesem Bereich zylindrisch konkav ausgebildet sein. Insbesondere ist das Expansionselement, zumindest im ungesetzten Ausgangszustand des Ankers, an der Furche von der Oberfläche der Schrägfläche beabstandet. Somit reicht das Expansionselement, zumindest im Ausgangszustand des Ankers, nicht in die Furche hinein, zumindest nicht bis zum Grund der Furche. Zweckmässigerweise korrespondiert der Querschnitt des Spreizkonus in den Oberflächenbereichen des Spreizkonus, die in Umfangsrichtung betrachtet versetzt zur Furche verlaufen, mit dem Querschnitt der gegenüberliegenden Innenseite des Expansionselements, wohingegen der Querschnitt des Spreizkonus an der Furche vom Querschnitt der gegenüberliegenden Innenseite des Expansionselements abweicht. Sofern mehrere Furchen vorgesehen sind, korrespondiert zweckmässigerweise der Querschnitt des Spreizkonus zwischen den Furchen mit dem Querschnitt der gegenüberliegenden Innenseite des Expansionselements, wohingegen der Querschnitt des Spreizkonus an den Furchen vom Querschnitt der gegenüberliegenden Innenseite des Expansionselements abweicht.

Weiterhin ist es vorteilhaft, dass in die Schrägfläche mehrere zum ersten Ende des Bolzens hin geschlossene Furchen eingebracht sind, welche jeweils die Kontaktfläche zwischen dem Expansionselement und der Schrägfläche verringern. Hierdurch kann die Reibung noch weiter gesenkt und das zuvor beschriebene "Pumpen" noch besser unterstützt werden. Die Furchen sind vorzugsweise alle gleich lang. Sie beginnen vorzugsweise alle an derselben Axialposition und/oder enden vorzugsweise alle an derselben Axialposition. Sofern mehrere erfindungsgemässe Furchen vorgesehen sind, können die in dieser Schrift beschriebenen Merkmale für eine dieser Furchen, für einen Teil der Furchen oder für sämtliche Furchen gelten. Besonders bevorzugt ist es, dass in die Schrägfläche zumindest vier zum ersten Ende des Bolzens hin geschlossene Furchen eingebracht sind, insbesondere zumindest eine Furche pro Querschnittsquadrant des Bolzens, bezogen auf seine Längsachse, was insbesondere dann vorteilhaft sein kann, wenn das Expansionselement eine Spreizhülse ist und die Schrägfläche durch einen Spreizkonus gebildet wird. Bevorzugt weist der Bolzen zwischen benachbarten Furchen einen kreissegmentförmigen Querschnitt auf.

Insbesondere für einen besonders gleichmässigen Kraftverlauf und damit hohe Lasten und hohe Zuverlässigkeit kann weiterhin vorgesehen werden, dass die Furchen, insbesondere im Querschnitt senkrecht zur Längsachse des Bolzens, äquidistant angeordnet sind, und/oder dass die Furchen gleichmässig um den Spreizkonus herum verteilt sind. Letztgenanntes Merkmal kann insbesondere dann vorteilhaft sein, wenn das Expansionselement eine Spreizhülse ist. Unter äquidistanter Anordnung kann insbesondere verstanden werden, dass benachbarte Furchen im Querschnitt des Ankers senkrecht zur Bolzenlängsachse stets dieselbe Winkeldistanz an der Bolzenlängsachse aufweisen.

Besonders wirksam sind die Furchen, wenn durch die Furchen die Kontaktfläche zwischen dem Expansionselement und der Schrägfläche um 20-50% verringert ist.

Zweckmässigerweise sind die einzelnen Furchen relativ schmal, beispielsweise um zu verhindern, dass das Expansionselement beim Aufspreizen in die Furchen hineingebogen wird. Demgemäss ist es besonders bevorzugt, dass die im Querschnitt des Bolzens an der Längsachse gemessene maximale Winkelweite der zumindest einen Furche kleiner als 30°, insbesondere kleiner als 15° ist.

Insbesondere kann die Erfindung bei Bolzenankern zum Einsatz kommen, bei denen die Spreizhülse bei gesetztem Anker nicht bis zum Bohrlochmund reicht. Denn bei Bolzenankern wird der Spreizvorgang besonders stark von den einzelnen Reibungsvorgängen am Anker beeinflusst. Demgemäss kann am Bolzen ein Anschlag ausgebildet sein, der eine Verschiebung des Expansionselements von der Schrägfläche hinweg begrenzt, insbesondere eine Verschiebung in Auszugsrichtung. Ein solcher Anschlag kann bei einem Bolzenanker in besonders einfacher Weise gewährleisten, dass das Expansionselement zuverlässig zusammen mit dem Bolzen in das Bohrloch eindringt. Vorzugsweise ist der Anschlag eine Ringschulter, was herstellungstechnisch und im Hinblick auf die Zuverlässigkeit vorteilhaft sein kann. Insbesondere ist der Anschlag axial zwischen der Schrägfläche und der Lastaufnahmeeinrichtung angeordnet.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine teilweise längsgeschnittene Ansicht eines in einem Betonsubstrat gesetzten erfindungsgemässen Spreizankers; und
- Figur 2:: eine perspektivische Ansicht des Bolzens des Ankers aus Figur 1 im Bereich des vorderen, ersten Endes des Bolzens.

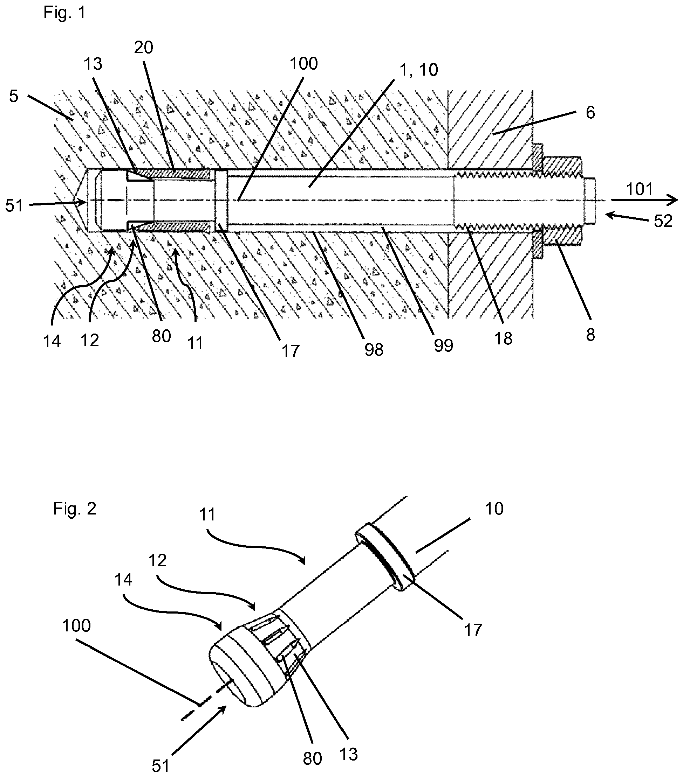

Die Figuren 1 bis 3 zeigen ein Ausführungsbeispiel eines erfindungsgemässen Spreizankers 1. Wie insbesondere Figur 1 zeigt, weist der Spreizanker 1 einen Bolzen 10 und ein als Spreizhülse ausgebildetes Expansionselement 20 auf, wobei die Spreizhülse den Bolzen 10 ringförmig umgibt. Im Bereich seines vorderen Endes 51 weist der Bolzen 10 einen Halsbereich 11, einen vorderseitig an den Halsbereich 11 stetig anschliessenden Spreizkonus 12 für die Spreizhülse 20 und einen an den Spreizkonus 12 vorderseitig stetig anschliessenden Spitzenbereich 14 auf.

Im Halsbereich 11 weist der Bolzen 10 einen im Wesentlichen konstanten zylindrischen Querschnitt auf. Am hieran anschliessenden Spreizkonus 12 ist die Oberfläche des Bolzens 10 als Schrägfläche 13 ausgebildet, und der Durchmesser des Bolzens 10 nimmt dort zum ersten Ende 51 hin zu, das heisst der Bolzen 10 weitet sich am Spreizkonus 12 ausgehend vom Halsbereich 11 zu seinem vorderen ersten Ende 51 und zum Spitzenbereich 14 hin auf. Die Schrägfläche 13 am Spreizkonus 12 kann konisch im streng mathematischen Sinne sein, muss dies aber nicht. Im Spitzenbereich 14 ist der Bolzenquerschnitt schliesslich im Wesentlichen konstant oder nimmt zumindest zum ersten Ende 51 hin weniger stark zu als am Spreizkonus 12.

Auf der dem Spreizkonus 12 abgewandten Seite des Halsbereichs 11 weist der Bolzen 10 einen beispielsweise als Ringschulter ausgebildeten Anschlag 17 für die Spreizhülse 20 auf. Im Bereich seines rückwärtigen Endes 52 weist der Bolzen eine Lastaufnahmeeinrichtung 18 zur Einleitung von Zugkräften in den Bolzen 10 auf, die hier beispielhaft als Aussengewinde ausgebildet ist. Auf diesem Aussengewinde sitzt eine Mutter 8.

Beim Setzen des Spreizankers 1 wird der Bolzen 10 mit seinem ersten Ende 51 voran in Richtung der Längsachse 100 des Bolzens 10 in ein Bohrloch 99 im Substrat 5 aus Figur 1 geschoben. Aufgrund des Anschlags 17, der eine Verschiebung des Expansionselements 20 vom Spreizkonus 12 hinweg begrenzt, wird dabei auch das als Spreizhülse ausgebildete Expansionselement 20 in das Bohrloch 99 eingebracht. Sodann wird der Bolzen 10, beispielsweise durch Anziehen der Mutter 8, wieder ein Stück weit in der parallel zur Längsachse 100 verlaufenden Auszugsrichtung 101 aus dem Bohrloch 99 herausgezogen. Aufgrund seiner Reibung an der im wesentlichen zylindrischen Wand 98 des Bohrlochs 99 bleibt das als Spreizhülse ausgebildete Expansionselement 20 dabei im Bohrloch 99 zurück und es kommt infolgedessen zu einer Verschiebung des Bolzens 10 relativ zum Expansionselement 20. Bei dieser Verschiebung dringt die Schrägfläche 13 des Spreizkonus 12 des Bolzens 10 immer tiefer so in das Expansionselement 20 ein, dass das Expansionselement 20 von der Schrägfläche 13 radial aufgeweitet und mit der Wand 98 des Bohrlochs 99 verpresst wird. Durch diesen Mechanismus wird der Spreizanker 1 im Substrat 5 fixiert. Der gesetzte Zustand des Spreizankers 1, in dem er im Substrat 5 fixiert ist, ist in Figur 1 gezeigt. Mittels der Mutter 8 kann ein Anbauteil 6 am Substrat 5 festgelegt werden.

Im Spreizkonus 12 sind mehrere Furchen 80 vorgesehen, die gleichmässig, also mit konstanter Flächendichte, auf dem Spreizkonus 12 verteilt sind. Die Furchen 80 erstrecken sich jeweils in Richtung der jeweils grössten Steigung des Spreizkonus 12, jeweils parallel zu einer Projektion der Längsachse 100 auf die Oberfläche des Spreizkonus 12. Die Furchen 80 haben alle dieselbe axiale Länge und enden an ihrer einen Seite am Übergang des Halsbereichs 11 in den Spreizkonus 12 und an ihrer anderen Seite vor Erreichen des Spitzenbereichs 14. Die Furchen 80 reduzieren lokal die Reibung zwischen dem Expansionselement 20 und dem Bolzen 10, so dass in gerissenem Beton ein niedriger Reibungskoeffizient gegeben ist, der ein Vor- und Zurückgleiten des Bolzens 10 im Expansionselement 20 bei Rissöffnung und anschliessender Rissschliessung erlaubt. Da die sich die Furchen 80 nicht oder nur geringfügig in den Spitzenbereich 14 hinein erstrecken, kann dabei jedoch die maximale Reibung zwischen Expansionselement 20 und Bolzen 10 und damit die maximale statische Auszugslast weiterhin hoch sein.

## Patentansprüche

1. Spreizanker (1) mit
- einem Bolzen (10) und
- einem Expansionselement (20),
- wobei im Bereich des ersten Endes (51) des Bolzens eine Schrägfläche (13) angeordnet ist, welche das Expansionselement (20) radial nach aussen drängt, wenn der Bolzen (10) in einer Auszugsrichtung (101) relativ zum Expansionselement (20) versetzt wird, und wobei der Bolzen (10) im Bereich seines dem ersten Ende (51) abgewandten rückwärtigen Endes (52) eine Lastaufnahmeeinrichtung (18) aufweist, welche zur Einleitung von Zugkräften, die in Auszugsrichtung (101) gerichtet sind, in den Bolzen (10) geeignet ist,
**dadurch gekennzeichnet,**
- **dass** in die Schrägfläche (13) zumindest eine zum ersten Ende (51) des Bolzens (10) hin geschlossene Furche (80) eingebracht ist, welche die Kontaktfläche zwischen dem Expansionselement (20) und der Schrägfläche (13) verringert.

2. Spreizanker (1) nach Anspruch 1,
**dadurch gekennzeichnet,**
- **dass** das Expansionselement (20) eine Spreizhülse ist, die den Bolzen (10) zumindest bereichsweise umgibt, und
- **dass** der Bolzen (10) einen Spreizkonus (12) aufweist, wobei die Schrägfläche (13) durch den Spreizkonus (12) gebildet wird.

3. Spreizanker (1) nach Anspruch 2,
**dadurch gekennzeichnet,**
**dass** der Bolzen (10) einen Spitzenbereich (14) aufweist, der sich auf der dem ersten Ende (51) zugewandten Seite des Spreizkonus (12) an den Spreizkonus (12) anschliesst, und in dem der Querschnitt des Bolzen (10) zumindest so gross ist wie im Spreizkonus (12), wobei die Furche (80) vor dem Spitzenbereich (14) oder im Spitzenbereich (14) endet.

4. Spreizanker (1) nach einem der vorstehenden Ansprüche,
**dadurch gekennzeichnet,**
- **dass** die Ausdehnung der Furche (80) in Axialrichtung des Bolzens (10) grösser ist als in die Ausdehnung der Furche (80) in Umfangsrichtung des Bolzens (10),
- wobei die Furche (80) entlang einer Projektion der Längsachse (100) des Bolzens (10) auf die Schrägfläche (13) verläuft.

5. Spreizanker (1) nach einem der vorstehenden Ansprüche,
**dadurch gekennzeichnet,**
**dass** die Innenoberfläche des Expansionselements (20) im Bereich der Furche (80) glatt ist und/oder dass das Expansionselement (20) nicht in die Furche (80) eingreift.

6. Spreizanker (1) nach einem der vorstehenden Ansprüche,
**dadurch gekennzeichnet,**
**dass** in die Schrägfläche (13) mehrere zum ersten Ende (51) des Bolzens (10) hin geschlossene Furchen (80) eingebracht sind, welche jeweils die Kontaktfläche zwischen dem Expansionselement (20) und der Schrägfläche (13) verringern.

7. Spreizanker (1) nach Anspruch 6,
**dadurch gekennzeichnet,**
**dass** die Furchen (80) äquidistant angeordnet sind.

8. Spreizanker (1) nach Anspruch 6 oder 7,
**dadurch gekennzeichnet,**
**dass** durch die Furchen (80) die Kontaktfläche zwischen dem Expansionselement (20) und der Schrägfläche (13) um 20 - 50% verringert ist.

9. Spreizanker (1) nach einem der vorstehenden Ansprüche,
**dadurch gekennzeichnet,**
**dass** die im Querschnitt des Bolzens (10) an der Längsachse (100) gemessene maximale Winkelweite der zumindest einen Furche (80) kleiner als 30°, insbesondere kleiner als 15° ist.

10. Spreizanker (1) nach einem der vorstehenden Ansprüche,
**dadurch gekennzeichnet,**
**dass** der Bolzen (10) einen Anschlag (17), beispielsweise eine Ringschulter, aufweist, der eine Verschiebung des Expansionselements (20) von der Schrägfläche (13) hinweg begrenzt.

## Claims

1. Expansion anchor (1) with
- a bolt (10) and
- an expansion element (20),
- in which in the area of the first end (51) of the bolt a bevel (13) is arranged, which pushes the expansion element (20) radially outwards, if the bolt (10) is moved in an extraction direction (101) in relation to the expansion element (20), and in which in the area of its rear end (52) facing away from the first end (51) the bolt (10) has a load suspension device (18), which is suitable for introducing traction forces, which are oriented in the extraction direction (101), into the bolt (10), **characterised in that**
- at least one groove (80) that is closed towards the first end (51) of the bolt (10) is introduced into the bevel (13), which reduces the contact surface between the expansion element (20) and the bevel (13).

2. Expansion anchor (1) according to claim 1,
**characterised in that**
- the expansion element (20) is an expansion sleeve, which surrounds the bolt (10) at least in areas, and
- the bolt (10) has an expansion cone (12), in which the bevel (13) is formed through the expansion cone (12).

3. Expansion anchor (1) according to claim 2,
**characterised in that**
the bolt (10) has a point area (14), which is connected to the expansion cone (12) on the side of the expansion cone (12) facing towards the first end (51), and in which the cross section of the bolt (10) is at least as big as in the expansion cone (12), in which the groove (80) ends before the point area (14) or in the point area (14).

4. Expansion anchor (1) according to one of the above claims,
**characterised in that**
- the expansion of the groove (80) in the axial direction of the bolt (10) is greater than in the expansion of the groove (80) in the circumferential direction of the bolt (10),
- in which the groove (80) runs on the bevel (13) along a projection of the longitudinal axis (100) of the bolt (10).

5. Expansion anchor (1) according to one of the previous claims,
**characterised in that**
the inner surface of the expansion element (20) in the area of the groove (80) is smooth and/or the expansion element (20) does not engage in the groove (80).

6. Expansion anchor (1) according to one of the previous claims,
**characterised in that**
several grooves (80) that are closed towards the first end (51) of the bolt (10) are introduced into the bevel (13), which reduce the contact surface between the expansion element (20) and the bevel (13).

7. Expansion anchor (1) according to claim 6,
**characterised in that**
the grooves (80) are arranged equidistant.

8. Expansion anchor (1) according to claim 6 or 7,
**characterised in that**
the contact surface between the expansion element (20) and the bevel (13) is reduced by 20 - 50% through the grooves (80).

9. Expansion anchor (1) according to one of the previous claims,
**characterised in that**
the maximum angle of the at least one groove (80) measured on the longitudinal axis (100) in the cross section of the bolt (10) is smaller than 30°, particularly smaller than 15°.

10. Expansion anchor (1) according to one of the previous claims,
**characterised in that**
the bolt (10) has a stop (17), an annular shoulder for example, which limits a movement of the expansion element (20) away from the bevel (13).

## Revendications

1. Ancrage expansible (1) comportant :
- un boulon (10) et
- un élément d'expansion (20),
- dans lequel une surface oblique (13) est agencée dans la zone de la première extrémité (51) du boulon, laquelle surface oblique pousse l'élément d'expansion (20) radialement vers l'extérieur lorsque le boulon (10) est déplacé dans une direction d'extraction (101) par rapport à l'élément d'expansion (20), et dans lequel le boulon (10) comporte, dans la zone de son extrémité arrière (52) opposée à la première extrémité (51), un dispositif d'absorption de charge (18) qui est adapté pour introduire dans le boulon (10) des forces de traction dirigées vers le dispositif d'extraction (101), **caractérisé en ce que**,
- au moins une rainure (80) fermée par rapport à la première extrémité (51) du boulon (10) est introduite dans la surface oblique (13), laquelle rainure réduit la surface de contact entre l'élément d'expansion (20) et la surface oblique (13).

2. Ancrage d'expansion (1) selon la revendication 1,
**caractérisé en ce que**
- l'élément d'expansion (20) est une douille d'expansion qui entoure le boulon (10) au moins dans certaines zones, et
- le boulon (10) comporte un cône d'expansion (12), la surface oblique (13) étant formée par le cône d'expansion (12).

3. Ancrage d'expansion (1) selon la revendication 2,
**caractérisé en ce que**
le boulon (10) comporte une zone d'embout (14) qui est contigüe au cône d'expansion (12) sur le côté du cône d'expansion (12) dirigé vers la première extrémité (51), et dans lequel la section transversale du boulon (10) est au moins aussi grande que dans le cône d'expansion (12), dans lequel la rainure (80) se termine avant la zone d'embout (14) ou dans la zone d'embout (14).

4. Ancrage d'expansion (1) selon l'une des revendications précédentes,
**caractérisé en ce que**
- l'expansion de la rainure (80) est plus grande dans une direction axiale du boulon (10) que l'expansion de la rainure (80) dans une direction circonférentielle du boulon (10),
- dans lequel la rainure (80) s'étend le long d'une projection de l'axe longitudinal (100) du boulon (10) sur la surface oblique (13).

5. Ancrage d'expansion (1) selon l'une des revendications précédentes,
**caractérisé en ce que**
la surface intérieure de l'élément d'expansion (20) est plate dans la zone de la rainure (80) et/ou l'élément d'expansion (20) ne s'engage pas dans la rainure (80).

6. Ancrage d'expansion (1) selon l'une des revendications précédentes,
**caractérisé en ce que**
plusieurs rainures (80) fermées par rapport à la première extrémité (51) du boulon (10) sont introduites dans la surface oblique (13), lesquelles rainures réduisent respectivement la surface de contact entre l'élément d'expansion (20) et la surface oblique (13).

7. Ancrage d'expansion (1) selon la revendication 6,
**caractérisé en ce que**
les rainures (80) sont agencées de manière équidistante.

8. Ancrage d'expansion (1) selon la revendication 6 ou 7
**caractérisé en ce que**
les rainures (80) permettent de réduire la surface de contact entre l'élément d'expansion (20) et la surface oblique (13) de 20 à 50 %.

9. Ancrage d'expansion (1) selon l'une des revendications précédentes,
**caractérisé en ce que**
la largeur angulaire maximale de la au moins une rainure (80), mesurée dans la section transversale du boulon (10) sur l'axe longitudinal (100) est inférieure à 30°, en particulier inférieure à 15°.

10. Ancrage d'expansion (1) selon l'une des revendications précédentes,
**caractérisé en ce que**
le boulon (10) comporte une butée (17), par exemple un épaulement annulaire, qui limite un déplacement de l'élément d'expansion (20) en s'éloignant de la surface oblique (13).
